# EUROPEAN PATENT SPECIFICATION

(11) **EP 1 869 861 B1**
(45) Date of publication and mention of the grant of the patent: **16.12.2009**
(21) Application number: 06721701.8
(22) Date of filing: 23.03.2006
(51) Int. Cl.: H04L 29/06, H04L 29/08

(54) **A BROWSER-PLUGIN BASED METHOD FOR ADVANCED HTTPS DATA PROCESSING**
VERFAHREN ZUR VERBESSERTEN HTTPS DATENVERARBEITUNG BASIEREND AUF BROWSER-PLUGINS
PROCEDE BASE SUR PLUGICIEL DE NAVIGATEUR DE TRAITEMENT AVANCE DE DONNEES HTTPS

(43) Date of publication of application: 26.12.2007
(73) Proprietor: Slipstream Data Inc., Waterloo, ON N2V 2C5 (CA)
(72) Inventor: NANDURI, Akshay, Waterloo, Ontario N2J 4Z1 (CA); SINGH, Ajit, Mississauga, Ontario N2T 1Z5 (CA); AHMED, Salmaan, Mississauga, Ontario L5V 1T1 (CA); SZE, David, Kitchener, Ontario N2G 4Z6 (CA)
(74) Representative: Rickard, David John
(86) International application number: PCT/CA2006/000434
(87) International publication number: WO 2007/106967

(56) References cited:
- WO-A1-2004/043042
- WO-A2-2004/079497
- US-A1- 2002 002 636
- US-A1- 2002 129 137
- US-A1- 2005 278 793
- US-B1- 6 658 006
- US-B2- 6 654 807
- US-B2- 6 981 195
- FIELDING ET AL: "RFC 2616 Hypertext Transfer Protocol -- HTTP/1.1 (part of)" INTERNET CITATION, [Online] June 1999 (1999-06), XP002204677 Retrieved from the Internet: URL:http://www.w3.org/Protocols/rfc2616/rf c2616-sec14.html> [retrieved on 2002-07-04]

## Description

### Field of the invention

The present invention relates to a novel method of utilizing a browser plugin that provides a technique for interception and further processing of data sent via the HTTPS protocol. The HTTPS protocol is defined as HTTP over a Secure Socket Layer (SSL), or HTTP over a Transport Layer Security (TLS). See A. Freier, P. Karlton and P. Kocher, "Internet-Draft: The SSL Protocol Version 3.0," Transport Layer Security Group, November 1996, for a discussion of SSL, and T. Dierks and C. Allen, "Request for Comments: 2246 - The TLS Protocol," Network Working Group, January 1999 for a discussion of TLS. A potential application of the subject method can be to apply proprietary data compression methods to reduce the volume of data communication of HTTPS payload data and also to possibly reduce the data transmission time. It should be noted that the option of applying proprietary data processing in this case is available in addition to standard built-in HTTPS compression and encoding approaches such as 'Content-Encoding' methods: gzip, compress, deflate, described in section 3.5 of the article entitled "Request for Comments: 2616, Hypertext Transfer Protocol - HTTP/1.1," Network Working Group, June 1999, by R. Fielding, J. Gettys, J. Mogul, H Frystyk, L. Masinter, P. Leach, and T. Berners-Lee.

### Background of the invention

Presently, large volumes of data are delivered over the Internet by server computers to client computing devices such as desktop computers, laptops and various handheld digital devices using a communication protocol called 'Hyper Text Transfer Protocol' (HTTP). The HTTP protocol strictly defines the interaction between a client device that sends requests for data, and a server that supplies the data. A client, after sending the request for data to the server, waits for the server's response, and then normally, upon receipt of data, delivers the data to the end user. In many cases, the client is implemented by a software component called a 'web-browser'. The server is usually implemented by a software component called a 'web-server'.

Rapid expansion in Internet usage by businesses, banking and direct consumer shopping led to the definition of a standard approach for sending encrypted HTTP data between HTTP clients and servers. This approach (also known as HTTPS) was first implemented by Netscape as HTTP over a Secure-Socket Layer (SSL) TCP/IP connection. The HTTPS protocol allowed end-users and corporations to safely send credit-card and other sensitive information over the internet. More specifically, it prevents eavesdropping, message forgery and tampering of HTTP data sent between client/server applications. The first implementations of HTTPS utilized 40-bit encryption while the latest standard (HTTP over TLS described in an article by E. Rescorla entitled "Request for Comments: 2818, HTTP over TLS," Network Working Group, May 2000), facilitates the use of powerful 128-bit encryption.

The underlying implementations of SSL and TLS are described in the article by A. Freier et al. and in the article by T. Dierks et al. respectively. Although the mechanisms are different, both SSL and TLS essentially involve several common stages:
1) Protocol version identification between web-browser and web-server.
2) Transmission of web-server's public key to the web-browser (the signed public key is also known as a *Certificate*).
3) Web-browser verifies the *Certificate* by communicating with a trusted entity (known as a Root Certificate Authority). This ensures that the web-browser is communicating with the intended web-server.
4) Negotiation and exchange of 'symmetric encryption-key' between web-browser and web-server.
5) The symmetric encryption-key is then used to establish an SSL or TLS 'channel' between the web-browser and web-server.
6) Encryption of all HTTP payload data between web-browser and web-server over the SSL/TLS channel.

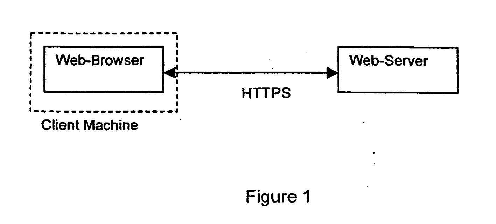

It is imperative for SSL and TLS functionality to be implemented by the web-browser so that the SSL/TLS 'channel' is established directly from the web-browser. This guarantees the encryption and security of all HTTP data originating from the web-browser and received from the web-server. Reference is made to Figure 1 which depicts the aforementioned scenario.

Now consider the compression of HTTPS data (HTTP payload data sent over an SSL or TLS channel) in order to reduce the volume of data transmission. Content-encoding methods inherently present in the HTTP standard (section 3.5 of the article by R. Fielding et al.) can be used to reduce the volume of data sent in HTTPS transactions. These methods consist of a class of lossless compression algorithms such as gzip, compress and deflate which can be supported within web-browsers and web-servers.

Unfortunately, custom approaches (e.g., proprietary data-compression) or any other proprietary or custom data processing cannot be supported by HTTPS. HTTPS does not provide for a standard interface or mechanism to facilitate custom data transformation. More specifically, the encryption of HTTP data actually randomizes the original source HTTP data. In an information-theoretic sense, the entropy of the encrypted data is significantly higher than the original source data. Significant randomization of source data limits the effectiveness of data-compression. The encrypted data also makes it difficult to do many other types of desirable data processing operations such as data recording, data monitoring, or data alteration. Since SSL and TLS are designed to prevent data-tampering or "man in the middle" viewing, retrieving the original source HTTP data is extremely difficult.

US2005/278793 discloses a distributor server that inserts security information into the headings of a HTTP reply. This security information is used to transmit usage rights described by or associated with the security information. This usage rights information does not communicate that further data processing operations are supported, nor is the usage rights information in the HTTP headers.

### GENERAL

There are two distinct methods to implement the Browser-Plugin Method for Advanced HTTPS Data Processing of the subject invention (BPAHDP). In both cases, BPAHDP provides the option of conducting custom data processing operations including data compression, data encryption, or other types of data processing operations supported by the HTTP standard. Additionally, both BPAHDP methods ensure that the web-browser still implements and executes the underlying SSL/TLS channel setup and encryption operations. In both embodiments of BPAHDP, the most critical functionality is the ability to modify HTTP request/response headers and data sent over a TLS/SSL channel. In the regular HTTP case (HTTP over TCP) headers and data are sent as clear-text (i.e., as unencrypted data). Therefore, an HTTP proxy (an intermediary software entity that fetches HTTP data on behalf of a group of HTTP clients) component can intercept and modify header/data as it chooses - allowing custom data processing operations (including a custom compression operation) to be implemented. The subject of Performance Enhancing Proxies is discussed in a document (Request for Comments 3135, Network Working Group, June 2001) by J. Border, M. Kojo, J. Griner, G. Montenegro, and Z. Shelby, entitled, "Performance Enhancing Proxies Intended to Mitigate Link-Related (Degradations". For HTTPS traffic, the data leaving a web-browser is encrypted. Therefore, a proxy cannot modify encrypted data, hence the novelty of the BPAHDP methodology. Both BPAHDP methods require specific implementation methods. In particular, both embodiments of BPAHDP require specific techniques to facilitate the use of Microsoft Internet Explorer as a BPAHDP enabled web-browser. Microsoft COM (Component Object Model) interfaces and IE's Pluggable Protocol capabilities are utilized to meet all requirements of both BPAHDP embodiments.

In a first aspect, the invention provides a method for customized processing of HyperText Transfer Protocol Secure 'HTTPS' data, comprising the steps of: creating a HTTPS request at a web browser comprising a request header to be transmitted to a web server using HTTPS; intercepting the HTTPS request before the HTTPS request is encrypted and modifying the request header to create a custom request header indicating that the web browser supports preselected customized processing operations, wherein the custom request header and the preselected customized processing operations are not defined in the HTTP/1.1 specification; encrypting and sending a the custom request header and the HTTPS request to the web server using HTTPS.

In a second aspect, the invention provides a web browser enabled for customized processing of HyperText Transfer Protocol Secure 'HTTPS' data, comprising: means for creating a HTTPS request comprising a request header to be transmitted to a web server using HTTPS; means for intercepting the HTTPS request before the HTTPS request is encrypted and modifying the HTTPS request header to create a custom request header indicating that the web browser supports preselected customized processing operations, wherein the custom request header and the preselected customized processing operations are not defined in the HTTP/1.1 specification; means for encrypting and sending the custom request header with the HTTPS request to a web server; means for receiving from the web server payload data and a HTTPS response header correlatable therewith, wherein the processed payload data is created by processing original payload data based upon one or more of the preselected customized processing operations indicated to be supported by the web browser; and means for modifying the processed payload data utilizing one or more of the preselected customized processing operations to create modified payload data indicative of the original payload data to be used for further processing.

In a third aspect, the invention provides a web browser plug-in for enabling a web browser to undertake the customized processing of HyperText Transfer Protocol Secure 'HTTPS' data, comprising means for modifying the web browser to perform the steps of: intercepting a HTTPS request before the HTTPS request is encrypted and modifying the HTTPS request header to create a custom request header indicating that the web browser supports preselected customized processing operations, wherein the custom request header and the preselected customized processing operations are not defined in the HTTP/1.1 specification; encrypting and sending the custom request header with a HTTPS request to a web server using HTTPS; receiving from the web server processed payload data and a HTTPS response header correlatable therewith, wherein the processed payload data is created by processing original payload data utilizing one or more of the preselected customized processing operations supported by the web browser; modifying the processed payload data utilizing the one or more of the preselected customized processing operations to create modified payload data indicative of the original payload data; and presenting the modified header and the modified payload data to the web browser for further processing.

In a fourth aspect, the invention provides a computer-readable medium comprising instructions executable on a processor of a computing device wherein the instructions, when executed by the processor, cause the computing device to perform the steps of the method of the first aspect.

### Brief description of the drawings

Figure 1 is a diagram depicting a SSL/TLS channel between a web-browser and a web-server.

Figure 2 is a diagram depicting the block level architecture for implementing Method '1' described in this document.

Figure 3 is a diagram depicting the block level architecture for implementing Method '2' described in this document.

### Detailed description of the invention

### Embodiment of BPAHDP Method '1'

Define WSA as a BPAHDP enabled web-server (a web-server that has implemented 'Advanced Processing' or custom data processing of HTTP payload data) that is able to accept HTTPS connections from standard web-browsers. In addition, define WBA as a web-browser that has implemented the following functionality required by BPAHDP, and is thus BPAHDP enabled:

1) The ability to add custom headers on all outgoing HTTP requests sent over an SSL/TLS channel. For example:
GET http://www.slipstream.com HTTP/1.0\r\n
   Connection: Close\r\n
   \r\n
is modified to:
GET http://www.slipstream.com HTTP/1.0\r\n
   Connection: Close\r\n
   X-BPAHDP: <control_info>\r\n
   \r\n

2) The presence of the X-BPAHDP header identifies WBA as being BPAHDP enabled. The 'control_info' field is utilized to identify the BPAHDP version (identifying the supported data processing operations present in the web-browser) and any other relevant control information required during the custom data processing operation.

3) The ability to read and modify the HTTP response header returned by WSA over the TLS/SSL channel. For example:
HTTP/1.0 200 OK\r\n
   Content-Type: text/xml\r\n
   Content-Length: 300\r\n
   X-BPAHDP: <control_info>\r\n
   \r\n
might be modified to:
HTTP/1.0 200 OK\r\n
   Content-Type: **text/html\r\n**
   Content-Length: **200\r\n**
   \r\n

Since BPAHDP facilitates data transformation and filtering, the modification of certain HTTP headers (Content-Type and Content-Length) may be required. Additionally, certain response headers may need to be parsed and stored by the BPAHDP filtering method (in the above example <control_info> may be used during the decompression or some ther data processing operation).

4) The ability to read and modify the HTTP payload data returned by WSA over an SSL/TLS channel. For example:
HTTP/1.0 200 OK\r\n
   Content-Type: text/plain\r\n
   Content-Length: 16\r\n
   X-BPAHDP: <control_info>\r\n
   \r\n
   "This is a test"
may be modified to
HTTP/1.0 200 OK\r\n
   Content-Type: text/plain \r\n
   Content-Length: 20\r\n
   \r\n
   "This is not a test"

5) The BPAHDP enabled web-browser must be able to communicate with other non-BPAHDP enabled web-servers for both HTTP and HTTPS data.

### System Architecture and Operation of the Method '1'

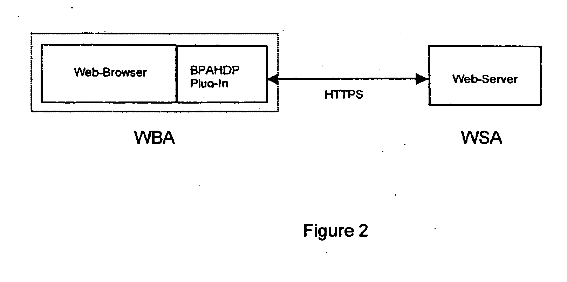

This subsection describes the block level architecture and operational method for carrying out custom data processing on HTTPS data based on the capabilities described earlier in Method '1'. The terms WBA and WSA in this subsection have the same definition as given in Method '1'. In the method described in this subsection, the HTTP based data exchange between WBA and WSA takes place over a SSL/TLS channel. Block level architectural diagram depicting the operation is given in Figure 2.
1) The BPAHDP enabled web-browser (WBA) is used to modify the outgoing HTTP request headers to indicate to the BPAHDP enabled web-server (WSA) that the requesting WBA is capable of carrying out certain custom data processing (e.g. ability to decompress data that is compressed using a certain data compression algorithm called 'X')
2) If the WSA receives the indication from a WBA about being BPAHDP enabled and its associated capabilities, the WSA sends the HTTP response data to WBA in a form that can only be processed by a WBA that possesses the indicated capabilities. For example, if the WBA indicated that it is capable of decompressing data that has been compressed using a certain data compression algorithm called 'X', then WSA compresses its HTTP payload data using the algorithm 'X'. If the WSA does not receive any such indication or if the WSA is not BPAHDP enabled then WSA sends its HTTP response in the usual manner intended for a normal web-browser and without using the algorithm 'X'.
3) The ability of WBA to modify HTTP response headers and payload is used by the WBA to intercept the HTTP response headers and data and apply the custom data processing operation and present it to the web-browser in a format that is acceptable to a normal web-browser.

### Embodiment of BPAHDP Method '2'

Define WSA as a BPAHDP enabled web-server (a web-server that has implemented 'Advanced Data Processing' or custom data processing of HTTP payload data) and is able to accept HTTPS connections from standard web-browsers. Also define CS as a standard HTTP/HTTPS web-server that provides the HTTP content to WSA.

The BPAHDP enabled web-server (WSA) meets the following requirements:
1) Ability to communicate with the CS via HTTP or HTTPS.
2) Executes the compression or filtering operation on HTTP payload data.
3) Can receive and accept HTTPS requests from WBA or from non-BPAHDP enabled web-browsers.

In addition, define WBA as a web-browser that has implemented the following functionality required by BPAHDP:

1) The ability to add custom headers on all outgoing HTTP requests sent over an SSL/TLS channel. For example:
GET http://www.slipstream.com HTT.P/1.0\r\n
   Connection: Close\r\n
   \r\n
is modified to:
GET http://www.slipstream.com HTTP/1.0\r\n
   Connection: Close\r\n
   X-BPAHDP: <control_info>\r\n
   \r\n

2) The presence of the X-BPAHDP header identifies WBA as being BPAHDP enabled. The <control_info> field is utilized to identify the BPAHDP version (identifying the supported custom data processing operations present in the web-browser) and any other relevant control information used during the data processing operations.

3) The ability to read and modify the HTTP response header returned by WSA over the TLS/SSL channel. For example:
HTTP/1.0 200 OK\r\n
   Content-Type: text/xml\r\n
   Content-Length: 300\r\n
   X-BPAHDP: <control_info>\r\n
   \r\n
may be modified to:
HTTP/1.0 200 OK\r\n
   Content-Type: **text/html**\r\n
   Content-Length: **200**\r\n
   \r\n

Since BPAHDP facilitates data transformation and filtering, the modification of certain HTTP headers (Content-Type and Content-Length) may be required. Additionally, certain response headers may need to be parsed and stored by the BPADPH filtering method (in the above example <control_info> may be used during the decompression or filtering operation).

4) The ability to read and modify the HTTP payload data returned by WSA over an SSL/TLS channel. For example:
HTTP/1.0 200 OK\r\n
   Content-Type: text/plain\r\n
   Content-Length: 16\r\n
   X-BPACH: <control_info>\r\n
   \r\n
   "This is a test"
may be modified to
HTTP/1.0 200 OK\r\n
   Content-Type: text/plain \r\n
   Content-Length: 20\r\n
   \r\n
   "This is not a test"

5) The ability to modify the HTTP URL (Uniform Resource Locator) of objects originally destined for the CS. For example, in order to route all HTTP requests to WSA :
GET http://www.slipstreamCS.com HTTP/1.0\r\n
   Connection: Close\r\n
   \r\n
is modified to:
GET http://www.slipstreamWSA.com HTTP/1.0\r\n
   Connection: Close\r\n
   X-BPAHDP: <control_info>\r\n
   \r\n

6) The BPAHDP enabled web-browser must be able to communicate with other non-BPAHDP enabled web-servers for both HTTP and HTTPS data.

### System Architecture and Operation of the Method '2':

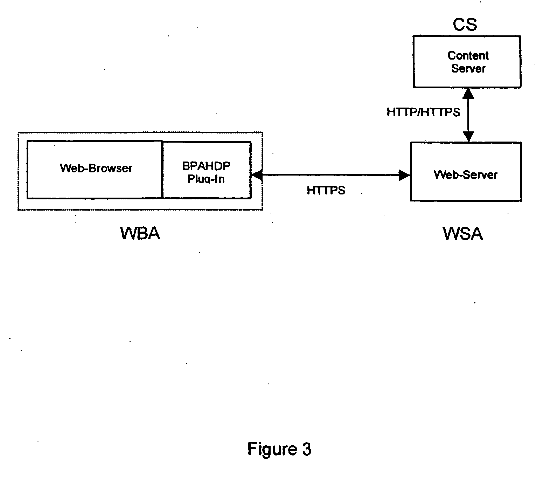

In certain situations, it may not be possible to enable the target content server (CS) with the custom data processing capability required for BPAHDP. In that case, the HTTPS request originally intended for CS can be redirected to another server (WSA) that is enabled with custom data processing expected by a BPAHDP-enabled web-browser (WBA). This subsection describes the system architecture and operational method for carrying out custom data processing on HTTPS data based on the capabilities described earlier in Method '2'. The terms CS, WBA and WSA in this subsection have the same definition as given in Method '2'. In the method described in this subsection, the HTTP based data exchange between WBA and WSA takes place over a SSL/TLS channel. The use of SSL/TLS channel for the HTTP based data exchange between WSA and CS is optional. System architecture depicting the operation of the method is given in Figure 3.
1) The ability to modify the outgoing URL in Method '2' is used by WBA to divert a HTTP request over SSL/TLS channel originally directed to a content-server CS to another web-server WSA that is enabled with the data processing capabilities expected by a BPAHDP enabled web browser in Method '2'.
2) The BPAHDP enabled web-browser modifies the outgoing HTTP request headers over SSL/TLS channel to indicate to the WSA that the requesting WBA is capable of carrying out certain custom data processing (e.g. ability to decompress data that is compressed using an algorithm called X) WBA also specifies the URL of the requested data at content server CS.
3) WSA receives the request from the WBA over SSL/TLS channel and makes a request to the content server CS for the response data required by WBA using HTTP or HTTPS and receives the response data from the content server CS.
4) Based on the indication from the requesting WBA about its capabilities, the WSA sends the HTTP response data over SSL/TLS channel to the WBA in a form that can only be processed by a WBA that possesses the indicated capabilities. For example, if the WBA indicated that it is capable of decompressing data that has been compressed using a data compression algorithm called 'X', then WSA compresses is HTTP payload data to be sent over SSL/TLS channel using the algorithm 'X'. If the WSA does not receive any such indication then WSA sends its HTTP response over SSL/TLS channel for a normal web-browser that may not be BPAHDP enabled.
5) The ability of WBA to modify HTTP response headers and payload over SSL/TLS channel is used by the WBA to intercept the HTTP response headers and data and apply the custom data processing operation and present it to the web-browser in a format that is acceptable to a normal web-browser.

### Implementation of Custom Data Processing Using BPAHDP Method

Implementation of BPAHDP capabilities on the server side to realize a WSA, required for Method 1 or Method 2, can be done in two ways: (1) Implementation of a custom web server that implements the specified capabilities, (2) Via implementation of server-side plug-in supported by several web-servers.

On the client side, the exact strategy used for implementing Method 1 and Method '2', is dependent on the Application Programmers' Interface (API) of the web browser product that is used for implementation. There are two distinct strategies for the implementation depending on the situation:
(a) This strategy is applicable in the case where the source code of the web-browser is available. In this case, intercepting outgoing HTTP requests, incoming HTTP response headers, HTTP payload data, is a straightforward programming task. The interception and modification takes place after the browser has prepared the HTTPS GET request but before the request data has been encrypted. After interception, the modifications required by Method '1' or Method '2', as the case may be, can be applied.
(b) For some web browsers, access to the source code may not be available. In such cases, the available Application Programmers' Interfaces (APIs) are to be used. The following subsection describes the APIs for Microsoft's Internet Explorer versions 4.0 and up-to the versions released to-date that can be used for implementing Method '1' and Method '2':

### Embodiment of BPAHDP Methods in Microsoft Internet Explorer

Define COM as Microsoft Component Object Model - Microsoft's implementation of interconnecting software objects via Remote Procedure Calls (RPC), function parameter marshalling and automation. Define IE as Microsoft Internet Explorer versions 4.0 and above. Define a Pluggable Protocol as a COM object that can override IE's handling of specific web schema. For example, an "http://' Pluggable Protocol can override a complete "http://" transaction that is normally carried out by IE.

The aforementioned requirements of BPAHDP, can be met in IE by novel use of the COM interfaces exposed by Internet Explorer (IE). Use of these interfaces facilitate the modification of HTTP request headers, modification of HTTP response headers, modification of HTTP response data as well as URL link translation. Define the BPAHDP-PP as a COM object contained in a dynamic-linked library (DLL). The BPAHDP-PP is registered as an "https" Pluggable Protocol and implements all of core BPAHDP functionality (header modification, data processing, URL translation).

The following steps are followed to implement BPAHDP functionality in Microsoft Internet Explorer (IE):
1) Create a COM object that implements the IlnternetProtocol, IInternetProtocolRoot and IHttpNegotiate interfaces. This COM object is the BPAHDP-PP.
2) Register the COM object as a Pluggable Protocol for the "https" protocol. This is accomplished by placing the unique identifier (GUID) of the BPAHDP-PP in the Microsoft Windows registry key - HKEY_CLASSES_ROOT\ PROTOCOLS\Name-Space Handler\https.
3) In the BPAHDP-PP, utilize the IInternetProtocolRoot::Start method to implement the URL link translation requirement of BPAHDP. For example, in Method-2 of BPAHDP, the URL requested by the IE web-browser may be modified from www.slipstreamCS.com to www.slipstreamWSA.com. The original URL to fetch is passed as a function parameter to IInternetProtocolRoot::Start. Hence, the actual URL fetched can be modified by the BPAHDP-PP, which provides the function implementation of IInternetProtocolRoot::Start.
4) In the BPAHDP-PP, utilize the IHttpNegotiate:: BeginningTransaction method to modify the outgoing HTTP request header sent over the SSL/TLS channel. The HTTP request header should be modified such that the IE web-browser is identified as being BPAHDP enabled. For example,
   GET http://www.slipstreamWSA.com HTTP/1.0\r\n
      Connection: Close\r\n
      \r\n
   is modified to:
   GET http://www.slipstreamWSA.com HTTP/1.0\r\n
      Connection: Close\r\n
      X-BPAHDP: <control_info>\r\n
      \r\n

   The 'pszAdditionalHeaders' function parameter (a reference parameter) in IHttpNegotiate::BeginningTransaction is modified by the BPAHDP-PP to contain any custom HTTP headers to add in the outbound HTTP request.
5) In the BPAHDP-PP, utilize the IHttpNegotiate::OnResponse method to modify the incoming HTTP response header received over the SSL/TLS channel. The response header may be modified to reflect the specific data filtering operation that is implemented. The operation may change the MIME-type (content-type) of the data, as well as the aggregate content length. Moreover, the response header may contain specific control information for the filtering operation implemented in BPAHDP-PP. For example,
   HTTP/1.0 200 OK\r\n
      Content-Type: text/plain\r\n
      Content-Length: 16\r\n
      X-BPACH: <control_info>\r\n
      \r\n
      "This is a test"
   may be modified to:
   HTTP/1.0 200 OK\r\n
      Content-Type: text/plain \r\n
      Content-Length: 20\r\n
      \r\n
      "This is not a test"

   The 'szReponseHeaders' function parameter in IHttpNegotiate::OnResponse contains the entire HTTP response header returned by the BPAHDP enabled web-server. The 'szReponseHeaders' parameter can also be completely rewritten by the BPAHDP-PP to contain a new HTTP response header.
6) The IInternetProtocol::Read method is called when the IE web-browser requests unfiltered (or decoded) data to be returned by the BPAHDP-PP. Data is written to a fixed-length buffer function parameter named 'pv', and the length of the unfiltered data is written passed back in the reference parameter 'pcbRead'.

It should be recognized that the embodiments described herein and shown in the drawing figures are meant to be illustrative only and should not be taken as limiting the scope of invention. Those skilled in the art will recognize that the elements of the illustrated embodiments can be modified in arrangement and detail without departing from the appended claims. Therefore, the invention as described herein contemplates all such embodiments and modified embodiments as may come within the scope of the following claims or equivalents thereof.

## Claims

1. A method for customized processing of HyperText Transfer Protocol Secure 'HTTPS' data, comprising the steps of:
creating a HTTPS request at a web browser comprising a request header to be transmitted to a web server using HTTPS;
intercepting the HTTPS request before the HTTPS request is encrypted and modifying the request header to create a custom request header indicating that the web browser supports preselected customized processing operations, wherein the custom request header and the preselected customized processing operations are not defined in the HTTP/1.1 specification;
encrypting and sending the custom request header and the HTTPS request to the web server using HTTPS.

2. The method of claim 1, also comprising the steps of:
receiving from the web server over HTTPS processed payload data and a custom response header correlatable therewith, wherein the processed payload data is created by processing original payload data based upon one or more of the customized processing operations indicated to be supported by the web browser; and
modifying the processed payload data utilizing one or more of the customized processing operations to create modified payload data indicative of the original payload data.

3. The method of claim 2, also comprising the step of presenting the custom response header and the modified payload data to the web browser.

4. The method of any one of the preceding claims, also comprising the step of modifying a URL of an object to be fetched by the web browser.

5. The method of claim 4, wherein the object is a web site address for a content server.

6. The method of any one of the preceding claims, wherein using HTTPS comprises using a Secure Socket Layer 'SSL' connection or a Transport Layer Security 'TLS' connection.

7. The method of any one of the preceding claims, wherein the web browser is installed on a computing device and has an Application Programming Interface for plug-ins.

8. The method of any one of the preceding claims, wherein the customized processing operations comprise any one or any combination of: a compression operation, a decompression operation, an encryption operation, or a decryption operation.

9. A web browser enabled for customized processing of HyperText Transfer Protocol Secure 'HTTPS' data, comprising:
means for creating a HTTPS request comprising a request header to be transmitted to a web server using HTTPS;
means for intercepting the HTTPS request before the HTTPS request is encrypted and modifying the HTTPS request header to create a custom request header indicating that the web browser supports preselected customized processing operations, wherein the custom request header and the preselected customized processing operations are not defined in the HTTP/1.1 specification;
means for encrypting and sending the custom request header with the HTTPS request to a web server;
means for receiving from the web server payload data and a HTTPS response header correlatable therewith, wherein the processed payload data is created by processing original payload data based upon one or more of the preselected customized processing operations indicated to be supported by the web browser; and
means for modifying the processed payload data utilizing one or more of the preselected customized processing operations to create modified payload data indicative of the original payload data to be used for further processing.

10. The web browser of claim 9, also comprising means for modifying a URL of an object to be fetched by the web browser using HTTPS.

11. The web browser of claim 9 or claim 10, wherein using HTTPS comprises using a Secure Socket Layer 'SSL' connection or a Transport Layer Security 'TLS' connection.

12. The web browser of any one of claims 9 to 11, wherein customized processing operations comprise any one or any combination of: a compression operation, a decompression operation, an encryption operation, or a decryption operation.

13. A web browser plug-in for enabling a web browser to undertake the customized processing of HyperText Transfer Protocol Secure 'HTTPS' data, comprising means for modifying the web browser to perform the steps of:
intercepting a HTTPS request before the HTTPS request is encrypted and modifying the HTTPS request header to create a custom request header indicating that the web browser supports preselected customized processing operations, wherein the custom request header and the preselected customized processing operations are not defined in the HTTP/1.1 specification;
encrypting and sending the custom request header with a HTTPS request to a web server using HTTPS;
receiving from the web server processed payload data and a HTTPS response header correlatable therewith, wherein the processed payload data is created by processing original payload data utilizing one or more of the preselected customized processing operations supported by the web browser;
modifying the processed payload data utilizing the one or more of the preselected customized processing operations to create modified payload data indicative of the original payload data; and
presenting the modified header and the modified payload data to the web browser for further processing.

14. The web browser plug-in of claim 13, wherein using HTTPS comprises using a Secure Socket Layer 'SSL' connection or a Transport Layer Security 'TLS' connection.

15. The web browser plug-in of claim 13 or claim 14, wherein the web browser comprises an existing browser installed on a computing device and the existing browser has an Application Programming Interface for plug-ins.

16. The web browser plug-in of any one of claims 13 to 15, wherein the customized processing operations comprise any one or any combination of: a compression operation, a decompression operation, an encryption operation, or a decryption operation.

17. A computer-readable medium comprising instructions executable on a processor of a computing device wherein the instructions, when executed by the processor, cause the computing device to perform the steps of the method as claimed in any one of claims 1 to 8.

18. A computer program product comprising the computer-readable medium of claim 17.

19. The computer program product of claim 18, wherein the instructions on the computer readable medium comprise a web browser plug-in.

## Patentansprüche

1. Verfahren zur angepassten Verarbeitung von HTTPS-Daten (HyperText Transfer Protocol Secure), umfassend die folgenden Schritte:
das Erstellen einer HTTPS-Anfrage in einem Webbrowser, die einen Anfragen-Header umfasst, der mithilfe von HTTPS zu einem Webserver übertragen werden soll;
das Abfangen der HTTPS-Anfrage, bevor die HTTPS-Anfrage verschlüsselt wird, und das Modifizieren des Anfrage-Headers, um einen angepassten Anfrage-Header zu erstellen, der angibt, dass der Webbrowser vorausgewählte angepasste Verarbeitungsoperationen unterstützt, wobei der angepasste Anfrage-Header und die vorausgewählten angepassten Verarbeitungsoperationen nicht in der HTTP/1.1-Spezifikation definiert sind;
das Verschlüsseln und Senden des angepassten Anfrage-Headers und der HTTPS-Anfrage an den Webserver mithilfe von HTTPS.

2. Verfahren gemäß Anspruch 1, des Weiteren umfassend die folgenden Schritte:
das Empfangen von dem Webserver über HTTPS von verarbeiteten Nutzdaten und eines angepassten Antwort-Headers, der mit diesen korrelierbar ist, wobei die verarbeiteten Nutzdaten erstellt werden, indem ursprüngliche Nutzdaten basierend auf einer oder mehreren der angepassten Verarbeitungsoperation verarbeitet werden, deren Unterstützung durch den Webbrowser angegeben wurde; und
das Modifizieren der verarbeiteten Nutzdaten unter Verwendung von einer oder mehreren angepassten Verarbeitungsoperationen, um modifizierte Nutzdaten zu erstellen, die auf die ursprünglichen Nutzdaten schließen lassen.

3. Verfahren gemäß Anspruch 2, des Weiteren umfassend den Schritt des Übergebens des angepassten Antwort-Headers und der angepassten Nutzdaten an den Webbrowser.

4. Verfahren gemäß einem der vorherigen Ansprüche, des Weiteren umfassend den Schritt des Modifizierens einer URL eines Objekts, das durch den Webbrowser abgerufen werden soll.

5. Verfahren gemäß Anspruch 4, wobei das Objekt eine Website-Adresse oder ein Content-Server ist.

6. Verfahren gemäß einem der vorherigen Ansprüche, wobei die Verwendung von HTTPS die Verwendung einer SSL-Verbindung (Secure Socket Layer) oder einer TLS-Verbindung (Transport Layer Security) umfasst.

7. Verfahren gemäß einem der vorherigen Ansprüche, wobei der Webbrowser auf einem Computergerät installiert ist und eine Anwendungsprogrammierschnittstelle (Application Programming Interface - API) für Plugins hat.

8. Verfahren gemäß einem der vorherigen Ansprüche, wobei die angepassten Verarbeitungsoperationen eine beliebige der folgenden oder jede beliebige Kombination aus diesen umfasst: eine Komprimierungsoperation, eine Dekomprimierungsoperation, eine Verschlüsselungsoperation oder eine Entschlüsselungsoperation.

9. Webbrowser, der zur angepassten Verarbeitung von HTTPS-Daten (HyperText Transfer Protocol Secure) in der Lage ist, umfassend:
Mittel zum Erstellen einer HTTP-Anfrage, die einen Anfragen-Header umfasst, der mithilfe von HTTPS zu einem Webserver übertragen werden soll;
Mittel zum Abfangen der HTTPS-Anfrage, bevor die HTTPS-Anfrage verschlüsselt wird, und zum Modifizieren des Anfrage-Headers, um einen angepassten Anfrage-Header zu erstellen, der angibt, dass der Webbrowser vorausgewählte angepasste Verarbeitungsoperationen unterstützt, wobei der angepasste Anfrage-Header und die vorausgewählten angepassten Verarbeitungsoperationen nicht in der HTTP/1.1-Spezifikation definiert sind;
Mittel zum Verschlüsseln und Senden des angepassten Anfrage-Headers mit der HTTP-Anfrage an einen Webserver;
Mittel zum Empfangen von dem Webserver von Nutzdaten und eines HTTPS-Antwort-Headers, der mit diesen korrelierbar ist, wobei die verarbeiteten Nutzdaten erstellt werden, indem ursprüngliche Nutzdaten basierend auf einer oder mehreren der vorausgewählten angepassten Verarbeitungsoperation verarbeitet werden, deren Unterstützung durch den Webbrowser angegeben wurde; und
Mittel zum Modifizieren der verarbeiteten Nutzdaten unter Verwendung von einer oder mehreren angepassten Verarbeitungsoperationen, um modifizierte Nutzdaten zu erstellen, die auf die ursprünglichen Nutzdaten schließen lassen, zur Verwendung zur weiteren Verarbeitung.

10. Webbrowser gemäß Anspruch 9, des Weiteren umfassend Mittel zum Modifizieren einer URL eines Objekts, das durch den Webbrowser unter Verwendung von HTTPS abgerufen werden soll.

11. Webbrowser gemäß Anspruch 9 oder Anspruch 10, wobei die Verwendung von HTTPS die Verwendung einer SSL-Verbindung (Secure Socket Layer) oder einer TLS-Verbindung (Transport Layer Security) umfasst.

12. Webbrowser gemäß einem der Ansprüche 9 bis 11, wobei die angepassten Verarbeitungsoperationen eine beliebige der folgenden oder jede beliebige Kombination aus diesen umfasst: eine Komprimierungsoperation, eine Dekomprimierungsoperation, eine Verschlüsselungsoperation oder eine Entschlüsselungsoperation.

13. Webbrowser-Plugin, um einen Webbrowser in die Lage zu versetzen, die angepasste Verarbeitung von HTTPS-Daten (HyperText Transfer Protocol Secure) durchzuführen, umfassend Mittel zum Modifizieren des Webbrowsers, um die folgenden Schritte durchzuführen:
das Abfangen einer HTTPS-Anfrage, bevor die HTTPS-Anfrage verschlüsselt wird, und das Modifizieren des HTTPS-Anfrage-Headers, um einen angepassten Anfrage-Header zu erstellen, der angibt, dass der Webbrowser vorausgewählte angepasste Verarbeitungsoperationen unterstützt, wobei der angepasste Anfrage-Header und die vorausgewählten angepassten Verarbeitungsoperationen nicht in der HTTP/1.1-Spezifikation definiert sind;
das Verschlüsseln und Senden des angepassten Anfrage-Headers mit einer HTTPS-Anfrage an einen Webserver mithilfe von HTTPS;
das Empfangen von dem Webserver von verarbeiteten Nutzdaten und eines HTTPS-Antwort-Headers, der mit diesen korrelierbar ist, wobei die verarbeiteten Nutzdaten erstellt werden, indem ursprüngliche Nutzdaten unter Verwendung von einer oder mehreren der vorausgewählten angepassten Verarbeitungsoperation verarbeitet werden, die durch den Webbrowser unterstützt werden;
das Modifizieren der verarbeiteten Nutzdaten unter Verwendung der einen oder mehreren vorausgewählten angepassten Verarbeitungsoperationen, um modifizierte Nutzdaten zu erstellen, die auf die ursprünglichen Nutzdaten schließen lassen; und
das Übergeben des modifizierten Headers und der modifizierten Nutzdaten an den Webbrowser zur weiteren Verarbeitung.

14. Webbrowser-Plugin gemäß Anspruch 13, wobei die Verwendung von HTTPS die Verwendung einer SSL-Verbindung (Secure Socket Layer) oder einer TLS-Verbindung (Transport Layer Security) umfasst.

15. Webbrowser-Plugin gemäß Anspruch 13 oder Anspruch 14, wobei der Webbrowser einen vorhandenen Browser umfasst, der auf einem Computergerät installiert ist, und der vorhandene Browser eine Anwendungsprogrammierschnittstelle (Application Programming Interface - API) für Plugins hat.

16. Webbrowser-Plugin gemäß einem der Ansprüche 13 bis 15, wobei die angepassten Verarbeitungsoperationen eine beliebige der folgenden oder jede beliebige Kombination aus diesen umfasst: eine Komprimierungsoperation, eine Dekomprimierungsoperation, eine Verschlüsselungsoperation oder eine Entschlüsselungsoperation.

17. Computerlesbares Medium, das Anweisungen enthält, die auf einem Prozessor eines Computergeräts ausführbar sind, wobei die Anweisungen bei Ausführung durch den Prozessor das Computergerät dazu bringen, die Schritte des Verfahrens gemäß einem der Ansprüche 1 bis 8 durchzuführen.

18. Computerprogrammprodukt, umfassend das computerlesbare Medium gemäß Anspruch 17.

19. Computerprogrammprodukt gemäß Anspruch 18, wobei die Anweisungen auf dem computerlesbaren Medium ein Webbrowser-Plugin umfassen.

## Revendications

1. Un procédé pour un traitement personnalisé de données « HTTPS » (protocole de transfert hypertexte sécurisé), comportant les étapes visant à :
créer une demande HTTPS au niveau d'un navigateur web comportant un en-tête de demande devant être transmis à un serveur web en utilisant le HTTPS ;
intercepter la demande HTTPS avant que la demande HTTPS soit chiffrée et modifier l'en-tête de demande pour créer un en-tête de demande personnalisé indiquant que le navigateur web supporte des opérations de traitement personnalisées présélectionnées, où l'en-tête de demande personnalisé et les opérations de traitement personnalisées présélectionnées ne sont pas définis dans la spécification HTTP/1.1 ;
chiffrer et envoyer l'en-tête de demande personnalisé et la demande HTTPS au serveur web en utilisant le HTTPS.

2. Le procédé de la revendication 1, comportant également les étapes visant à :
recevoir du serveur web sur le HTTPS des données de charge utile traitées et un en-tête de réponse personnalisé pouvant être mis en corrélation avec ces dernières, où les données de charge utile traitées sont créées en traitant les données de charge utile originales sur la base d'une ou plusieurs des opérations de traitement personnalisées indiquées comme étant supportées par le navigateur web ; et
modifier les données de charge utile traitées en utilisant une ou plusieurs des opérations de traitement personnalisées pour créer des données de charge utile modifiées indicatrices des données de charge utile originales.

3. Le procédé de la revendication 2, comportant aussi l'étape visant à présenter l'en-tête de réponse personnalisé et les données de charge utile modifiées au navigateur web.

4. Le procédé de n'importe laquelle des revendications précédentes, comportant aussi l'étape visant à modifier un URL d'un objet que le navigateur web doit aller chercher.

5. Le procédé de la revendication 4, où l'objet est une adresse de site web pour un serveur de contenu.

6. Le procédé de n'importe laquelle des revendications précédentes, où l'utilisation du HTTPS comporte l'utilisation d'une connexion « SSL » (couche de sockets sécurisés) ou une connexion « TLS » (sécurité de couche transport).

7. Le procédé de n'importe laquelle des revendications précédentes, où le navigateur web est installé sur un dispositif informatique et a une interface de programmation d'applications pour des modules d'extension.

8. Le procédé de n'importe laquelle des revendications précédentes, où les opérations de traitement personnalisées comportent n'importe quelle opération ou n'importe quelle combinaison d'opérations parmi : une opération de compression, une opération de décompression, une opération de chiffrement, ou une opération de déchiffrement.

9. Un navigateur web équipé pour le traitement personnalisé de données « HTTPS » (protocole de transfert hypertexte sécurisé), comportant :
un moyen pour créer une demande HTTPS comportant un en-tête de demande devant être transmis à un serveur web en utilisant le HTTPS ;
un moyen pour intercepter la demande HTTPS avant que la demande HTTPS soit chiffrée et modifier l'en-tête de demande HTTPS pour créer un en-tête de demande personnalisé indiquant que le navigateur web supporte des opérations de traitement personnalisées présélectionnées, où l'en-tête de demande personnalisé et les opérations de traitement personnalisées présélectionnées ne sont pas définis dans la spécification HTTP/1.1 ;
un moyen pour chiffrer et envoyer l'en-tête de demande personnalisé avec la demande HTTPS à un serveur web ;
un moyen pour recevoir du serveur web des données de charge utile et un en-tête de réponse HTTPS pouvant être mis en corrélation avec ces dernières, où les données de charge utile traitées sont créées en traitant les données de charge utile originales sur la base d'une ou plusieurs des opérations de traitement personnalisées présélectionnées indiquées comme étant supportées par le navigateur web ; et
un moyen pour modifier les données de charge utile traitées en utilisant une ou plusieurs des opérations de traitement personnalisées présélectionnées pour créer des données de charge utile modifiées indicatrices des données de charge utile originales devant être utilisées pour un traitement supplémentaire.

10. Le navigateur web de la revendication 9, comportant également un moyen pour modifier un URL d'un objet que le navigateur web doit aller chercher en utilisant le HTTPS.

11. Le navigateur web de la revendication 9 ou de la revendication 10, où l'utilisation du HTTPS comporte l'utilisation d'une connexion « SSL » (couche de sockets sécurisés) ou une connexion « TLS » (sécurité de couche transport).

12. Le navigateur web de n'importe laquelle des revendications 9 à 11, où les opérations de traitement personnalisées comportent n'importe quelle opération ou n'importe quelle combinaison d'opérations parmi : une opération de compression, une opération de décompression, une opération de chiffrement, ou une opération de déchiffrement.

13. Un module d'extension de navigateur web pour permettre à un navigateur web d'entreprendre le traitement personnalisé de données « HTTPS » (protocole de transfert hypertexte sécurisé), comportant un moyen pour modifier le navigateur web pour réaliser les étapes visant à :
intercepter une demande HTTPS avant que la demande HTTPS soit chiffrée et modifier l'en-tête de demande HTTPS pour créer un en-tête de demande personnalisé indiquant que le navigateur web supporte des opérations de traitement personnalisées présélectionnées, où l'en-tête de demande personnalisé et les opérations de traitement personnalisées présélectionnées ne sont pas définis dans la spécification HTTP/1.1 ;
chiffrer et envoyer l'en-tête de demande personnalisé avec une demande HTTPS à un serveur web en utilisant le HTTPS ;
recevoir du serveur web des données de charge utile traitées et un en-tête de réponse HTTPS pouvant être mis en corrélation avec ces dernières, où les données de charge utile traitées sont créées en traitant les données de charge utile originales en utilisant une ou plusieurs des opérations de traitement personnalisées présélectionnées supportées par le navigateur web ;
modifier les données de charge utile traitées en utilisant la ou les opération(s) de traitement personnalisée(s) présélectionnée(s) pour créer des données de charge utile modifiées indicatrices des données de charge utile originales ; et
présenter l'en-tête modifié et les données de charge utile modifiées au navigateur web pour un traitement supplémentaire.

14. Le module d'extension de navigateur web de la revendication 13, où l'utilisation du HTTPS comporte l'utilisation d'une connexion « SSL » (couche de sockets sécurisés) ou une connexion « TLS » (sécurité de couche transport).

15. Le module d'extension de navigateur web de la revendication 13 ou de la revendication 14, où le navigateur web comporte un navigateur existant installé sur un dispositif informatique et le navigateur existant a une interface de programmation d'applications pour des modules d'extension.

16. Le module d'extension de navigateur web de n'importe laquelle des revendications 13 à 15, où les opérations de traitement personnalisées comportent n'importe quelle opération ou n'importe quelle combinaison d'opérations parmi : une opération de compression, une opération de décompression, une opération de chiffrement, ou une opération de déchiffrement.

17. Un support lisible par ordinateur comportant des instructions exécutables sur un processeur d'un dispositif informatique où les instructions, lorsqu'exécutées par le processeur, amènent le dispositif informatique à réaliser les étapes du procédé tel que revendiqué dans n'importe laquelle des revendications 1 à 8.

18. Un produit de programme informatique comportant le support lisible par ordinateur de la revendication 17.

19. Le produit de programme informatique de la revendication 18, où les instructions sur le support lisible par ordinateur comportent un module d'extension de navigateur web.
